(19) Europäisches Patentamt
European Patent Office
Office européen des brevets

(11) **EP 4 358 474 A1**

(12) **EUROPEAN PATENT APPLICATION**
published in accordance with Art. 153(4) EPC

(43) Date of publication:
**24.04.2024 Bulletin 2024/17**

(21) Application number: **22844986.4**

(22) Date of filing: **26.05.2022**

(51) International Patent Classification (IPC):
**H04L 12/28** (2006.01)

(52) Cooperative Patent Classification (CPC):
**H04L 9/40; H04L 12/28; H04L 43/12**

(86) International application number:
**PCT/CN2022/095351**

(87) International publication number:
**WO 2023/000819 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.07.2021 CN 202110832724**

(71) Applicant: **Siemens Aktiengesellschaft
80333 München (DE)**

(72) Inventors:
• **HUANG, Weidong
  Beijing 100876 (CN)**
• **FANG, Jingjing
  Beijing 100876 (CN)**
• **LIU, Xinyue
  Beijing 100876 (CN)**
• **GUO, Daifei
  Beijing 100876 (CN)**

(74) Representative: **Isarpatent
Patent- und Rechtsanwälte
Barth Hassa Peckmann & Partner mbB
Friedrichstraße 31
80801 München (DE)**

(54) **DEVICE SEARCHING METHOD, APPARATUS AND SYSTEM, AND COMPUTER READABLE MEDIUM**

(57) Embodiments of the present invention relate to the computer networking technology, and in particular, to a device searching method, apparatus and system, and a computer readable medium. The method comprises: obtaining (S301) fingerprint information of a first device in a first network; obtaining (S302) fingerprint information of each device in a second network; for each device in the second network, calculating (S303) the similarity between the fingerprint information of the device and the fingerprint information of the first device; and determining (S304) whether the first device should be a device in the second network according to all the calculated similarities. The similarity between devices in one network and all devices in another network is compared by using the fingerprint information, such that the device can be automatically searched.

Fig.4

**Description**

Technical Field

Embodiments of the present invention relate to the field of computer networks, in particular to a device searching method, apparatus and system, and a computer readable medium.

Background Art

At present, the boundary between the fields of OT and IT is gradually blurring; OT devices and IT devices are sometimes mixed together in the same network, such that OT devices and IT devices cannot be managed independently of each other. For example, in a device security aspect, an anti-attack capability of an OT device is generally weaker, and therefore we hope that a clearer physical boundary exists between OT and IT networks, to isolate devices in different networks from each other.

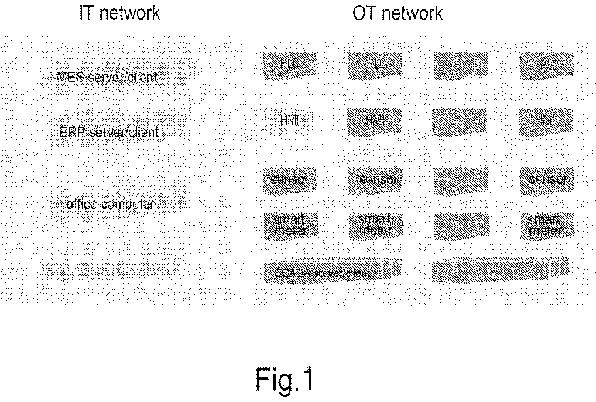

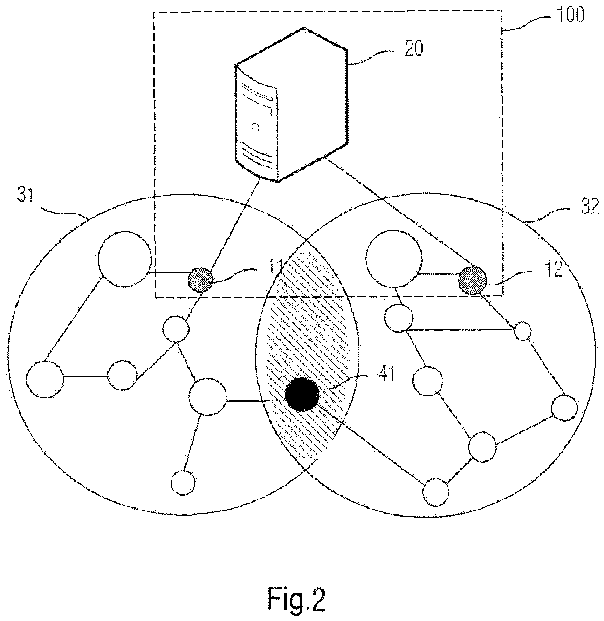

As shown in Fig. 1, taking a numerical-control processing center in a large-scale factory as an example, an OT network thereof comprises a router, a programmable logic controller (PLC), a motion controller, a human-machine interface (HMI), an assembly line, a material conveying system, an automated guided vehicle (AGV), a smart meter, a sensor, a supervisory control and data acquisition (SCADA) system, etc., and an IT network thereof may comprise various enterprise resource planning (ERP) systems, manufacturing execution systems (MES) and other systems, and an office computer, server, etc. Since many devices are in the numerical-control processing center network, the system structure complex and usage requirements diverse, for example: after a long period of operation, an IT device and OT device may simultaneously connect to the same switchboard or router, and a device which should belong to an OT network (for example, an HMI in Fig. 2) erroneously connects to an IT network, adding challenges for the security and protection of the OT device.

In addition, IT devices are generally directly exposed on the Internet, and therefore more easily attacked. If an OT device accesses an IT network, an attacked IT device may rapidly infect the OT device, which creates a huge security hazard for the OT device accessing the IT network. Moreover, if an OT device accesses the IT network, it is difficult to find said OT device in a short time, which also hugely adds to security threats faced by the OT device. At present, generally a scanning tool is used to discover an OT device in an IT network, and it is necessary to manually analyze a scanning result, therefore taking time and effort, and with low efficiency.

In summary, it is necessary to find an efficient practical method to discover an OT device in an IT network.

Summary of the Invention

Embodiments of the present invention provide a device searching method, apparatus and system, and a computer readable medium, used for finding a device in a network which should belong to another network, wherein by means of comparing fingerprint information of a specific device currently in a network with another network, it is determined whether said specific device should belong to said other network. Said method has advantages of efficiency and practicality, and may be used for discovering an OT device in an IT network.

A first aspect provides a device searching method. In said method, firstly fingerprint information of a first device in a first network and fingerprint information of each device in a second network are acquired; then for each device in the second network, a similarity between the fingerprint information of said device and the fingerprint information of the first device is calculated; and according to all the calculated similarities, it is judged whether the first device should be a device in the second network.

A second aspect provides an apparatus comprising modules for executing each step in the method provided in the first aspect.

A third aspect provides an apparatus, comprising: at least one memory, configured to store computer readable code; and at least one processor, configured to call the computer readable code, and execute the steps in the method provided in the first aspect.

A fourth aspect provides a computer readable medium, the computer readable medium stores a computer readable instruction, and the computer readable instruction being executed by a processor causes the processor to execute the steps in the method provided in the first aspect.

The fingerprint information is used to compare a degree of similarity between a device in a network and all the devices in another network, automatic search of a device may be achieved, similarity of fingerprint information of the devices in the same network is used to find a device which should belong to said network but which has erroneously accessed another network, and standard management of devices in a network may be achieved.

Regarding any one of the aspects above, optionally, the fingerprint information comprises: at least one piece of first type fingerprint information comprised in the first device and each device in the second network, and at least one piece of second type fingerprint information comprised in only some devices among all devices including the first device and each device in the second network. When a similarity is calculated between the fingerprint information of each device in the second network and the fingerprint information of the first device, for each piece of the first type fingerprint information, the closer a value of the first type fingerprint information of said device to a value of the first type fingerprint information of the first device, the higher the similarity between the fingerprint information of said device and the fingerprint information of the first device; for the at least one piece of second type fingerprint information, the closer the structure of the at least one piece of second type fingerprint information contained in said device to the structure of the at least one piece of second type fingerprint information contained in the first device, and the closer the values of the same item of the second type fingerprint information, the higher the similarity between the fingerprint information of said device and the fingerprint information of the first device.

The fingerprint information is divided into two types according to the above means, and an operable method is provided for comparison of the fingerprint information. Since not all devices are provided with the second type fingerprint information, once said type of fingerprint information is acquired, differences in the structures of the second type fingerprint information between devices can more clearly indicate differences between devices; therefore, combined use of first type fingerprint information and second type fingerprint information can more accurately show a similarity of fingerprint information between devices.

Brief Description of the Drawings

Fig. 1 shows a situation of an OT device accessing an IT network.

Fig. 2 is a schematic structural drawing of a device searching system provided by an embodiment of the present invention.

Fig. 3 is a schematic structural drawing of a device searching apparatus provided by an embodiment of the present invention.

Fig. 4 is a flowchart of a device searching method provided by an embodiment of the present invention.

Key to the Drawings:

100: device searching system
20: device searching apparatus 11: first information acquisition apparatus 12: second information acquisition apparatus
31: first network 32: second network 41: first device
201: memory 202: processor 203: communication interface
21: device searching program 211: information acquisition module 212: processing module
300: device searching method S301 - S304: method step

Detailed Description of the Invention

The subject matter described herein is now discussed with reference to exemplary embodiments. It should be understood that these embodiments are discussed purely in order to enable those skilled in the art to better understand and thus implement the subject matter described herein, without limiting the protection scope, applicability or examples expounded in the claims. The functions and arrangement of the elements discussed can be changed without departing from the protection scope of the content of the embodiments of the present invention. Various processes or components can be omitted from, replaced in or added to each example as required. For example, the method described may be performed in a different order from that described, and all of the steps may be added, omitted or combined. In addition, features described in relation to some examples may also be combined in other examples.

As used herein, the term "comprises" and variants thereof denote open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, either explicit or implicit. Unless clearly indicated in the context, the definition of a term is the same throughout the specification.

Below, in view of Figs. 2 - 4, embodiments of the present invention are explained in detail.

Fig. 2 is a schematic structural drawing of a device searching system provided by an embodiment of the present invention. As shown in Fig. 2, said device searching system 100 may comprise:

- a first information acquisition apparatus 11, deployed in a first network 31 and configured to acquire a data packet of a first device 41 in the first network 31;
- a second information acquisition apparatus 12, deployed in a second network 32 and configured to acquire a data packet of each device in the second network 32; and
- a device searching apparatus 10, configured to receive data packets from the first information acquisition apparatus 11 and second information acquisition apparatus 12, and acquire therefrom fingerprint information of the first device 41 and each device in the second network 32, and according to this, judge whether the first device 41 should be a device in the second network 32.

The first network 31 may be an IT network, and the second network 32 may be an OT network; or the second network 32 is an IT network, and the first network 31 is an OT network. Provided two networks are networks of different types, since a similarity between fingerprint information of devices in two networks is below a preset threshold value, the system provided by an embodiment of the present invention may be used to judge whether a situation exists in which a device in one network has accessed the other network. Another optional embodiment is respectively comparing fingerprint information of each device in the first network 31 with each device in the second network 32, to obtain a probability that said device in the first network 31 should be a device in the second network 32, then ordering all the devices in the first network 31 according to each probability, and according to an ordering result, judging which device or devices should be devices in the second network 32.

The first information acquisition apparatus 11 and the second information acquisition apparatus 12 may be a sniffer, or what can be called packet capture software, and may respectively capture data packets from the first network 31 and second network 32 by means of passive interception. Of course, the first information acquisition apparatus 11 and second information acquisition apparatus 12 also may capture data packets in networks by an active probing means, which is not defined here.

A device searching apparatus 20 may acquire fingerprint information of a first device 41 and each device in the second network 32 from data packets by means of deep packet inspection (DPI). A possible embodiment is the device searching apparatus 20 traversing all devices in the first network 31, that is, comparing each device respectively acting as the "first device 41" in the first network 31 with all devices in the second network 32, to determine whether same should belong to the second network 32.

Here, fingerprint information may comprise information which can uniquely identify a device in a network. Said information may comprise: first type fingerprint information and second type fingerprint information. The first type fingerprint information may be fingerprint information comprised in all devices in two networks (for example, the information in braces other than "EXTRA" in the expression below), whereas the second type fingerprint information may be fingerprint information comprised in only some devices in the two networks (for example, "EXTRA" in braces in the expression below).

The first type fingerprint information may comprise at least one item of the following information: IP address, MAC address, host name, operating system information and open port information (which may comprise: port, protocol, service name, component information, customer premises equipment (CPE) name, etc.).

An expression of fingerprint information may be:

DeviceFingerprintIPN = {IP, MAC, HOSTNAME, OS STRUCTURE (NAME, VERSION, STRUCTURE [PROCESS.Name]), Protocol STRUCTURE (PORT, PROTOCOL, SERVICE, COMPONENT, CPE), EXTRA} wherein DeviceFingerprintIPN denotes fingerprint information, IP denotes IP address, MAC denotes MAC address, HOSTNAME is host name, OS STRUCTURE is operating system information, and Protocol STRUCTURE is open port information.

An embodiment is as follows:

```
DeviceFingerprintIPN =
{
192.168.0.123,
00:1F:F8:35:99:2B,
Siemens AG Sector Industry Drive Technologies Motion
Control Systems,
Structure [Windows, 7 spl, Structure[winCC, word2003]]
Structure [22, tcp, open ssh, lshd secure shell 1.4.3
protocol 2.0;
111, tcp, rpcbind, none, none;
```

```
5900, tcp, vnc, VNC (protocol 3.8)],
None

}
```

An embodiment of second type fingerprint information is as follows:

```
[fingerprint-strings:
| FourOhFourRequest, GetRequest, HTTPOptions,
RTSPRequest:
| HTTP/1.1 404 Not Found
| Server: NT-ware-EmbeddedTcpServer-HttpsDevice/1.0
| Pragma: no-cache
| Content-Length:129
| Content-Type: text/html
| Connection:close]
```

wherein these items of information are not possessed by all devices, and, when judging a similarity between second type fingerprint information of one device and second type fingerprint information of another device, whether the structures of the second type fingerprint information contained in the two devices (i.e. specifically comprising which items of information) are similar may be considered, and, if the same items of information are comprised, then a similarity of specific values is further calculated, and thus, according to a similarity of structures and a similarity of values, a similarity of second type fingerprint information is comprehensively judged.

When calculating a fingerprint information similarity, use of the following method may be considered to establish a data model regarding the information:

1) For first type fingerprint information, taking an IP address and MAC address as examples,

$$IP=[A1],[A2],[A3],[A4]=[192],[168],[0],[123]$$

MAC= [B1], [B2], [B3], [B4], [B5], [B6] = [00], [1F], [F8], [35], [99], [2B]

2) For second type fingerprint information, a method of enumeration may be used to list various possible values, and taking a device attribute OpenPort (open port) as an example,

```
OpenPort.Port=["21","22","111","139", "445", "49152", "59
    00"]
    OpenPort.Transition=["tcp","udp"]
    OpenPort.Protocol=["open
    ssh","rpcbind","vnc","msrpc","netbios-ssn","microsoft-
    ds"]
    OpenPort.detail=[" lshd secure shell 1.4.3 protocol 2.0","
    BetaFTPd V11.04.01.00","Microsoft Windows RPC","Microsoft
    Windows netbios-ssn","Microsoft Windows 7 - 10 microsoft-
ds","VNC(protocol 3.8)"]
    Hence, a result obtained using one-hot encoding on the
    first device 41 is as follows:
    [22, 0, 0, 1] ;
    [111,0,1,0];
    [5900, 0, 2, 6]
```

When the device searching apparatus 20 acquires first type fingerprint information and second type fingerprint information from data packets captured by the first information acquisition apparatus 11 and second information acquisition apparatus 12, it may be that since a device is installed with antivirus software or uses another security protection measure, some items of information cannot be acquired. Even if some items of information of certain devices cannot be acquired, a possible value of same as a type of information item may still be compared with other fingerprint information.

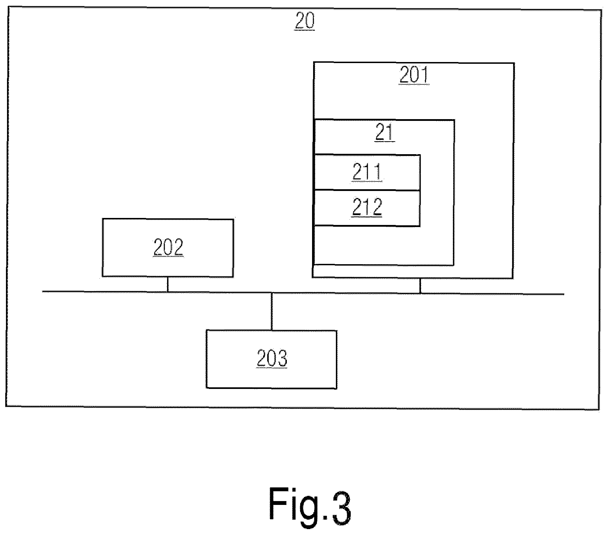

Fig. 3 is a schematic structural drawing of a device searching apparatus provided by an embodiment of the present invention. The device searching apparatus 20 may be realized as a network of computer processors, to execute the device searching method 300 in an embodiment of the present invention, or also may be a single computer, microcontroller or processing chip as shown in Fig. 1, comprising at least one memory 101, which comprises a computer readable medium, such as a random access memory (RAM). An apparatus 10 further comprises at least one processor 102 coupled to at least one memory 101. A computer executable instruction is stored in the at least one memory 101, and when executed by the at least one processor 102, may cause the at least one processor 102 to execute the steps herein.

The at least one memory 101 shown in Fig. 1 may include a device searching program 21, which causes the at least one processor 102 to execute the device searching method 300 of an embodiment of the present invention. As shown in Fig. 2, the device searching program 21 may comprise:

- an information acquisition module 211, configured to: acquire fingerprint information of a first device 41 in a first network 31 and acquire fingerprint information of each device in a second network 32; and

- a processing module 212, configured to calculate, for each device in the second network 32, a similarity between the fingerprint information of said device and the fingerprint information of the first device; and according to all calculated similarities, judging whether the first device 42 should be a device in the second network 32.

Optionally, the fingerprint information comprises: at least one piece of first type fingerprint information comprised in the first device and each device in the second network, and at least one piece of second type fingerprint information comprised in only some devices among all devices including the first device and each device in the second network. When the processing module 212 calculates, for each device in the second network, a similarity between the fingerprint information of said device and the fingerprint information of the first device, for each piece of first type fingerprint information, the closer a value of the first type fingerprint information of said device to a value of the first type fingerprint information of the first device, the higher the similarity between the fingerprint information of said device and the fingerprint information of the first device; and for the at least one piece of second type fingerprint information, the closer the structure of the at least one piece of second type fingerprint information contained in said device to the structure of the at least one piece of second type fingerprint information contained in the first device, and the closer the values of the same item of the second type fingerprint information, the higher the similarity between the fingerprint information of said device and the fingerprint information of the first device.

Below, the first network 31 is taken to be an IT network and the second network 32 is taken to be an OT network for further explanation. In the expression below, IT1 represents the first device 41, and the OT network contains n devices, respectively denoted as OT1, OT2, ..., OTn.

A similarity of fingerprint information between device IT1 and device OT1 is denoted as ScoreIT1vOT1, a similarity of fingerprint information between device IT1 and device OT2 is denoted as ScoreIT1vOT2, and so on: a similarity of fingerprint information between device IT1 and device OTn is denoted as ScoreIT1vOTn.

A similarity of fingerprint information between device IT1 and device OTj may be calculated by means of the following formula:

$ScoreIT1vOTj = WF1*S_{1j}(IP) + WF2*S_{1j}(MAC) + WF3*S_{1j}(HOSTNAME) + WF4*S_{1j}(OS) + WF5*S_{1j}(Protocol STRUCTURE) + WF6*S_{1j}(EXTRA)$

wherein $S_{1j}(IP)$ denotes a similarity between an IP address of device IT1 and an IP address of device OTj, $S_{1j}(MAC)$ denotes a similarity between a MAC address of device IT1 and a MAC address of device OTj, $S_{1j}(HOSTNAME)$ denotes a similarity between a host name of device IT1 and a host name of device OTj, $S_{1j}(OS)$ denotes a similarity between operating system information of device IT1 and operating system information of device OTj, $S_{1j}(Protocol STRUCTURE)$ denotes a similarity between open port information of device IT1 and open port information of device OTj, $S_{1j}(EXTRA)$ denotes a similarity between second type fingerprint information of device IT1 and second type fingerprint information of device OTj, these similarities may be calculated using Euclidean distance or Manhattan distance, and WF1, WF2, ..., WF6 are respective weights applied respectively to each similarity when calculating ScoreIT1vOTj, and may be preset according to experience.

Furthermore, on the basis of said each calculated value ScoreIT1vOT1, ScoreIT1vOT2, ..., ScoreIT1vOTn, a similarity of fingerprint information between device IT1 and the OT network may be arrived at; for example, a maximum value of all the values may be calculated:

$ScoreIT1vOT = MAX\{ScoreIT1vOT1, ScoreIT1vOT2, ..., ScoreIT1vOn\}$

A further example: an average value of all the values may be calculated:

ScoreIT1vOT = AVE{ScoreIT1vOT1, ScoreIT1vOT2, ..., ScoreIT1vOn}

Whether device IT1 should be a device in the OT network may be determined according to the maximum value or average value.

For example: the maximum values and average values for all devices in the IT network may be worked out, and then the devices are ranked respectively according to the maximum values and average values, a first threshold value and a second threshold value may be preset, and for a device with a maximum value which exceeds the first threshold value and/or a device with an average value which exceeds the second threshold value, it may be directly determined that same should be devices in the OT network, or whether same should be devices in the OT network is further determined by means of manual inspection.

Said modules further may also be seen as various functional modules realized by hardware, used for realizing various functions involved when the device searching apparatus 10 executes the device searching method; for example, a control logic of each process involved in said method is burnt in advance into, for example, a field-programmable gate array (FPGA) chip or a complex programmable logic device (CPLD), and these chips or devices execute the functions of said modules, and the particular embodiment may be determined according to engineering practice.

In addition, the device searching apparatus 10 further may comprise a communication interface 103, used for communication between the device searching apparatus 10 and another device, such as the first information acquisition apparatus 11 and second information acquisition apparatus 12.

It should be mentioned that an embodiment of the present invention may comprise an apparatus having a different architecture to that shown in Fig. 3. The architecture is merely exemplary, used for explaining the device searching method 300 provided by an embodiment of the present invention.

At least one processor 102 may comprise a microprocessor, an application-specific integrated circuit (ASIC), a digital signal processor (DSP), a central processing unit (CPU), a graphics processing unit (GPU), a state machine, etc. Embodiments of computer readable media include, but are not limited to, floppy disks, CD-ROM, magnetic disks, memory chips, ROM, RAM, ASIC, configured processors, all-optical media, all magnetic tapes or other magnetic media, or any other media from which instructions can be read by a computer processor. In addition, various other forms of computer readable media may send or carry instructions to a computer, including routers, dedicated or public networks, or other wired and wireless transmission devices or channels. The instructions may include code of any computer programming language, including C, C++, C language, Visual Basic, Java and JavaScript.

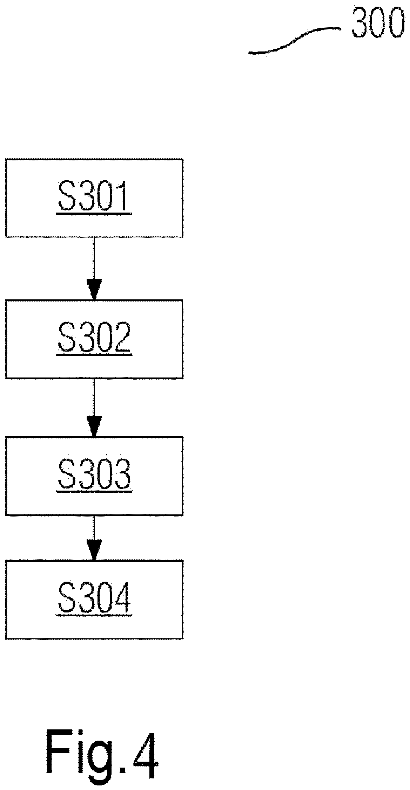

Fig. 4 is a flowchart of a device searching method provided by an embodiment of the present invention. Said method 300 may be executed by the aforementioned device searching apparatus 20, and may comprise the following steps:

- S301: acquiring fingerprint information of a first device 41 in a first network 31;
- S302: acquiring fingerprint information of each device in a second network 32;
- S303: for each device in the second network 32, calculating a similarity between the fingerprint information of said device and the fingerprint information of the first device 41;
- S304: according to all the calculated similarities, judging whether the first device should be a device in the second network.

For optional embodiments of the above steps, reference can be made to detailed descriptions of the device searching system 100 and device searching apparatus 20, which are not repeated here.

In addition, embodiments embodiments of the present invention further provide a computer readable medium, said computer readable medium stores a computer readable instruction, and the computer readable instruction being executed by a processor causes the processor to execute the aforementioned device searching method. Embodiments of the computer readable medium include a floppy disk, hard disk, magneto-optical disk, optical disk (such as CD-ROM, CD-R, CD-RW, DVD-ROM, DVD-RAM, DVD-RW, DVD+RW), magnetic tape, a nonvolatile memory card and ROM. Optionally, a computer readable instruction may be downloaded from a server computer or the cloud by a communication network.

In summary, embodiments of the present invention may be used to achieve automatic search of a device, solving the problem of a security threat caused by a device erroneously accessing a network, which may reduce time costs of operation and maintenance personnel. By means of managing fingerprint information of devices, a device may be discovered rapidly, facilitating standard management of network devices. In addition, using embodiments of the present invention may also achieve fast and accurate search of a new accessing device, and provides data support for network management of logic isolation technology.

It must be said that not all steps and modules in the above processes and system structure drawings are necessary; certain steps or modules may be omitted according to actual requirements. The order of execution of the steps is not fixed and may be adjusted according to requirements. The system structures described in the embodiments may be physical structures or may be logic structures, that is, some modules may be realized by the same physical entity, or some modules may be realized separately by multiple physical entities, or may be jointly realized by certain components in multiple independent devices.

**Claims**

1. A device searching method (300), **characterized by** comprising:

   - acquiring (S301) fingerprint information of a first device in a first network;
   - acquiring (S302) fingerprint information of each device in a second network;
   - for each device in the second network, calculating (S303) a similarity between the fingerprint information of said device and the fingerprint information of the first device; and
   - according to all the calculated similarities, judging (S304) whether the first device should be a device in the second network.

2. The method as claimed in claim 1, **characterized in that**

   - the fingerprint information comprises:
   - at least one piece of first type fingerprint information comprised in the first device and each device in the second network, and
   - at least one piece of second type fingerprint information comprised in only some devices among all devices including the first device and each device in the second network; and
   - said step of calculating (S303), for each device in the second network, a similarity between the fingerprint information of said device and the fingerprint information of the first device, comprises:
   - for each piece of the first type fingerprint information, the closer a value of the first type fingerprint information of said device to a value of the first type fingerprint information of the first device, the higher the similarity between the fingerprint information of said device and the fingerprint information of the first device; and
   - for the at least one piece of second type fingerprint information, the closer the structure of the at least one piece of second type fingerprint information contained in said device to the structure of the at least one piece of second type fingerprint information contained in the first device, and the closer the values of the same item of the second type fingerprint information, the higher the similarity between the fingerprint information of said device and the fingerprint information of the first device.

3. The method as claimed in claim 1 or 2, **characterized in that** the first type fingerprint information comprises at least one of the following:

   - IP address;
   - MAC address;
   - host name;
   - operating system information; and
   - open port information.

4. The method as claimed in claim 1 or 2, **characterized in that** the first network is an IT network, and the second network is an OT network.

5. A device searching apparatus (20), **characterized by** comprising:

   - an information acquisition module (211), configured to:
   - acquire fingerprint information of a first device in a first network; and
   - acquire fingerprint information of each device in a second network; and
   - a processing module (212), which is configured, for each device in the second network, to calculate a similarity between fingerprint information of said device and fingerprint information of the first device; and, according to all the calculated similarities, judge whether the first device should be a device in the second network.

**6.** The apparatus as claimed in claim 1, **characterized in that**:

- the fingerprint information comprises:
- at least one piece of first type fingerprint information comprised in the first device and each device in the second network, and
- at least one piece of second type fingerprint information comprised in only some devices among all devices including the first device and each device in the second network;
- when the processing module (212) calculates, for each device in the second network, the similarity between the fingerprint information of said device and the fingerprint information of the first device,
- for each piece of the first type fingerprint information, the closer a value of the first type fingerprint information of said device to a value of the first type fingerprint information of the first device, the higher the similarity between the fingerprint information of said device and the fingerprint information of the first device; and
- for the at least one piece of second type fingerprint information, the closer the structure of the at least one piece of second type fingerprint information contained in said device to the structure of the at least one piece of second type fingerprint information contained in the first device, and the closer the values of the same item of the second type fingerprint information, the higher the similarity between the fingerprint information of said device and the fingerprint information of the first device.

**7.** The apparatus as claimed in claim 5 or 6, **characterized in that** the first type fingerprint information comprises at least one of the following:

- IP address;
- MAC address;
- host name;
- operating system information; and
- open port information.

**8.** The apparatus as claimed in claim 5 or 6, **characterized in that** the first network is an IT network, and the second network is an OT network.

**9.** A device searching apparatus (20), **characterized by** comprising:

at least one memory (201), configured to store computer readable code; and
at least one processor (202), configured to call the computer readable code, and execute the method as claimed in any one of claims 1 - 4.

**10.** A computer readable medium, **characterized in that** the computer readable medium stores a computer readable instruction, and the computer readable instruction being executed by a processor causes the processor the method of any one of claims 1 - 4.

**11.** A device searching system (100), **characterized by** comprising:

- a first information acquisition apparatus (11), deployed in a first network and configured to acquire a data packet of a first device in the first network;
- a second information acquisition apparatus (12), deployed in a second network and configured to acquire a data packet of each device in the second network; and
- a device searching apparatus (20), configured to:
- receive data packets from the first information acquisition apparatus (11) and the second information acquisition apparatus (12);
- from the received data packets, acquire fingerprint information of a first device in the first network and fingerprint information of each device in the second network;
- for each device in the second network, calculate a similarity between the fingerprint information of said device and the fingerprint information of the first device; and
- according to all the calculated similarities, judge whether the first device should be a device in the second network.

IT network                    OT network

| MES server/client | PLC | PLC | | PLC |
| ERP server/client | HMI | HMI | | HMI |
| office computer | sensor | sensor | | sensor |
| | smart meter | smart meter | | smart meter |
| ... | SCADA server/client | | | |

# Fig.1

Fig.2

Fig.3

300

Fig.4

## INTERNATIONAL SEARCH REPORT

| International application No. |
| --- |
| **PCT/CN2022/095351** |

### A. CLASSIFICATION OF SUBJECT MATTER

H04L 12/28(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; ENTXTC; CNKI; WPABS; DWPI; ENTXT; 3GPP; IEEE: 工业控制网络, 操作技术网络, 信息技术网络, 设备, 识别, 发现, 确定, 区分, 区别, 指纹, 相似度, 比较, 比对, OT, IT, device, recognize, discover, determine, distinguish, fingerprint, similarity, compare

### C. DOCUMENTS CONSIDERED TO BE RELEVANT

| Category* | Citation of document, with indication, where appropriate, of the relevant passages | Relevant to claim No. |
| --- | --- | --- |
| A | CN 110086810 A (XI'AN JIAOTONG UNIVERSITY) 02 August 2019 (2019-08-02)<br>entire document | 1-11 |
| A | CN 111447153 A (BEIJING TIANDIHEXING TECHNOLOGY CO., LTD.) 24 July 2020 (2020-07-24)<br>entire document | 1-11 |
| A | CN 111104579 A (NSFOCUS INFORMATION TECHNOLOGY CO., LTD.; NSFOCUS TECHNOLOGY CO., LTD.) 05 May 2020 (2020-05-05)<br>entire document | 1-11 |
| A | US 2020076735 A1 (JOHNSON CONTROLS TECHNOLOGY CO.) 05 March 2020 (2020-03-05)<br>entire document | 1-11 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 August 2022** | **19 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/095351**

| Patent document cited in search report | | | Publication date (day/month/year) | Patent family member(s) | | | Publication date (day/month/year) |
|---|---|---|---|---|---|---|---|
| CN | 110086810 | A | 02 August 2019 | None | | | |
| CN | 111447153 | A | 24 July 2020 | None | | | |
| CN | 111104579 | A | 05 May 2020 | None | | | |
| US | 2020076735 | A1 | 05 March 2020 | US | 2020076694 | A1 | 05 March 2020 |

Form PCT/ISA/210 (patent family annex) (January 2015)